# EUROPÄISCHE PATENTSCHRIFT

(11) **EP 2 593 384 B1**
(45) Veröffentlichungstag und Bekanntmachung des Hinweises auf die Patenterteilung: **17.09.2014**
(21) Anmeldenummer: 11757525.8
(22) Anmeldetag: 15.07.2011
(51) Int. Cl.: B65G 13/10, B65G 47/54

(54) **TRANSFER-FÖRDERVORRICHTUNG**
TRANSFER CONVEYING APPARATUS
DISPOSITIF CONVOYEUR DE TRANSPORT

(30) Priorität: 16.07.2010 AT 12112010
(43) Veröffentlichungstag der Anmeldung: 22.05.2013
(73) Patentinhaber: TGW Mechanics GmbH, 4600 Wels (AT)
(72) Erfinder: WOLKERSTORFER, Christoph, A-4600 WeIs (AT); WOLKERSTORFER, Markus, A-4174 Niederwaldkirchen (AT)
(74) Vertreter: Burger, Hannes
(86) Internationale Anmeldenummer: PCT/AT2011/000304
(87) Internationale Veröffentlichungsnummer: WO 2012/006650

(56) Entgegenhaltungen:
- EP-A1- 1 323 647
- EP-A1- 1 375 389
- DE-A1- 2 423 138
- DE-U1-202005 015 544
- FR-A1- 2 852 940
- JP-A- 59 031 211
- US-A- 4 598 815
- US-A- 5 145 049
- US-A- 5 971 133
- US-A1- 2005 040 009
- OVERMEYER L ET AL: "Kleinskalige, multidirektionale transportmodule für den einstaz in der intralogistik", 1 January 2009 (2009-01-01), LOGISTICS JOURNAL:REFERIERTE VERÖFFENLICHUNGEN,, PAGE(S) 1 - 11, XP003031344, ISSN: 1860-7977

## Beschreibung

Die Erfindung betrifft eine Transfer-Fördervorrichtung mit einem Fördermodul, einem Basismodul, eine Förderebene ausbildenden Förderröllchen für den Transport eines Transportgutes in eine Hauptförderrichtung oder eine Nebenförderrichtung, einer Schwenk-Antriebsanordnung und einem Schwenk-Übertragungsmittel zum Schwenken der Förderröllchen um zur Förderebene senkrecht verlaufenden Schwenkachsen und einer Röllchen-Antriebsanordnung und einem Antriebs-Übertragungsmittel zum Antrieb der Förderröllchen, wobei jedes Förderröllchen über einen Lagerzapfen zwischen Lagerschenkel eines um die Schwenkachse schwenkbaren Röllchenträgers gelagert und um eine zur Schwenkachse senkrecht ausgerichtete Drehachse drehbar ist und wobei das Fördermodul mit dem Basismodul trennbar verbunden ist, welches Basismodul die Schwenk-Antriebsanordnung und die Röllchen-Antriebsanordnung umfasst und das Fördermodul ein Traggestell, zumindest eine quer zur Hauptförderrichtung angeordnete Reihe von Förderröllchen, das Schwenk-Übertragungsmittel zum Schwenken der Förderröllchen in dieser Reihe und das Antriebs-Übertragungsmittel zum Antrieb der Förderröllchen in dieser Reihe ausbildet, wobei das Traggestell zwischen Seitenschenkel des Basismoduls positionierte und mit diesen lösbar verbundene Stirnbleche sowie eine zwischen diesen erstreckende Tragleiste umfasst.

Eine solche Transfer-Fördervorrichtung ist aus der EP 0 956 249 B1 bekannt.

Aus der JP 59 031211 A, EP 1 375 389 A1, US 4,598,815 A, EP 1 323 647 A1, US 5,145,049 A, DE 24 23 138 A1, DE 20 2005 015 544 U1, US 5,971,133 A, FR 2 852 940 A1 und US 2005/0040009 A1 ist eine Transfer-Fördervorrichtung mit einem Fördermodul, einem Basismodul, eine Förderebene ausbildende Förderröllchen für den Transport eines Transportgutes in eine Hauptförderrichtung oder eine Nebenförderrichtung, zumindest einer Schwenk-Antriebsanordnung und einem Schwenk-Übertragungsmittel zum Schwenken der Förderröllchen um zur Förderebene senkrecht verlaufenden Schwenkachsen und zumindest einer Röllchen-Antriebsanordnung und einem Antriebs-Übertragungsmittel zum Antrieb der Förderröllchen, wobei jedes Förderröllchen an einem um die Schwenkachse drehbaren Röllchenträger gelagert ist und wobei das Fördermodul mit dem Basismodul trennbar verbunden ist, welches Basismodul die Schwenk-Antriebsanordnung und die Röllchen-Antriebsanordnung umfasst.

Die EP 0 956 249 B1 offenbart eine Transfer-Fördervorrichtung mit eine Förderebene ausbildenden Förderrollen für den Transport eines Transportgutes in eine Hauptförderrichtung oder eine Nebenförderrichtung, zumindest einer Schwenk-Antriebsanordnung und einem Schwenk-Übertragungsmittel zum Schwenken der Förderrollen um zur Förderebene senkrecht verlaufenden Schwenkachsen und zumindest einer Rollen-Antriebsanordnung und einem Antriebs-Übertragungsmittel zum Antrieb der Förderrolle, wobei jede Förderrolle an einem um die Schwenkachse drehbaren Rollenträger gelagert ist. Die Rollen-Antriebsanordnung (Antriebsrolle 24) und Schwenk-Antriebsanordnung (Zylinder 32) sind am Rahmen der Fördervorrichtung gelagert, daher am Basismodul angeordnet Jede der zwei schwenkbaren Förderrollen in einer Reihe ist über ein eigenes Antriebs-Übertragungsmittel (Antriebsriemen 26) mit der dieser Reihe zugeordneten Antriebsrolle gekoppelt.

Aus der US 3,983,988 A ist eine Transfer-Fördervorrichtung mit eine Förderebene ausbildenden, angetriebenen und um zur Förderebene senkrecht verlaufenden Schwenkachsen schwenkbaren Förderröllchen für die Förderung eines Transportgutes in eine Hauptförderrichtung und die Ein- und Ausschleusung in Nebenförderrichtungen bekannt. Dieser Transfer-Fördervorrichtung weist in einem Rahmengestell angetriebene Transportrollen für die Hauptförderrichtung auf. Zwischen diesen sind Reihen von über eine Förderbreite verteilt angeordneten, gemeinsam angetriebenen und um zu einer Förderebene senkrecht verlaufende Schwenkachsen schwenkbaren Förderröllchen vorgesehen, wobei jeder Reihe ein Schwenkantrieb zugeordnet ist.

Aus einem weiteren Dokument US 7,681,710 B2 ist eine Transfer-Fördervorrichtung mit gemeinsam angetriebenen, eine Förderebene für ein Transportgut ausbildenden Förderrollen für einen Hauptförderweg bekannt In einem Ein- und Ausschleusbereich für das Transportgut von bzw. zu einem Nebenförderweg sind in einem vergrößerten Zwischenraum der Förderrollen in einem Tragrahmen lösbar und mit einer gemeinsamen Antriebwelle reibschlüssig kuppelbar Bandfördermodule angeordnet, welche mit einer zu dem Hauptförderweg senkrecht verlaufenden Förderrichtung betrieben werden. Der Tragrahmen ist mit den Bandfördermodulen und mit der Antriebwelle in zur Förderebene der Förderrollen senkrechter Richtung verstellbar in einem Grundgestell des Transferförderers angeordnet.

Aufgabe der Erfindung ist es eine Transfer-Fördervorrichtung als in ein Fördersystem für Transportgut integrierbare Baueinheit für variierbare Förderrichtungen zu schaffen, welche aus den Wartungsaufwand vereinfachenden Baugruppen gebildet ist.

Diese Aufgabe der Erfindung wird durch die Transfer-Fördervorrichtung nach Anspruch 1 gelöst. Der Vorteil dabei ist, dass durch die bauliche Trennung in ein Fördermodul und ein Antriebsmodul bei einer einheitlichen Konzeption des die schwenkbaren Förderröllchen aufweisenden Fördermoduls, eine Anzahl von Kombinationsmöglichkeiten mit anwenderspezifisch ausgelegten Antriebssystemen der Fördereinrichtungen eines Fördersystems erreicht werden und der Wartungs- und Instandhaltungsaufwand vereinfacht wird. Das Schwenk-Übertragungsmittel ist einfach aufgebaut, die Anzahl der zum Schwenken der Förderröllchen bzw. Röllchenträger erforderlichen Mittel gering, sodass für das Fördermodul eine kompakte Bauform erreicht wird. Ebenso ist ein verschleißarmer Langzeitbetrieb möglich.

Eine sichere Übertragung der für die Förderung des Transportguts erforderlichen Vortriebskraft kann erreicht werden, wenn die von den Förderröllchen gebildete Förderebene der Transfer-Fördervorrichtung geringfügig oberhalb einer Förderebene benachbarter Förderer des Fördersystems, z.B. Rollen-, Band- Kettenförderer etc., verläuft.

Das Fördermodul und das Basismodul können zusammenwirkende, kulissenförmige Zentriermittel und Verbindungsmittel aufweisen, sodass kurze Zugriffszeiten zu den einzelnen Bauelementen des Fördermoduls erreicht und damit instandhaltungs- und wartungsbedingte Ausfallzeiten des Fördersystems wesentlich reduziert und Kosten eingespart werden.

Es ist von Vorteil, wenn das Fördermodul mehrere parallele und zueinander gering beabstandete, über eine Förderbreite erstreckende Reihen von Förderröllchen aufweist, weil dadurch der Fertigungs- und Montageaufwand reduziert wird.

Ist den Reihen eine gemeinsame, mit den Antriebs-Übertragungsmitteln kuppelbare Röllchen-Antriebsanordnung im Basismodul zugeordnet, werden die Anzahl der Antriebsverbindungen reduziert und Antriebsmittel eingespart.

Nach einer Ausführung der Erfindung ist es vorgesehen, dass den Reihen eine gemeinsame, mit den Schwenk-Übertragungsmitteln kuppelbare Schwenk-Antriebsanordnung im Basismodul zugeordnet ist. Dadurch wird eine Gruppenbildung von gemeinsam mit nur einer Schwenk-Antriebsanordnung und um einen gleichen Winkelbetrag schwenkbaren Reihen erreicht. Ferner kann die Anzahl der im Fördermodul angeordneten Reihen in Abhängigkeit der Transportanforderungen ausgelegt werden.

Die Schwenk-Antriebsanordnung ist durch einen Linearstelltrieb gebildet Der Linearstelltrieb ist ein mit Druckmedium beaufschlagbarer und eine Mittelstellung sowie zwei entgegengesetzte Endstellungen aufweisender Aktuator, wie eine doppelt wirkende Zylinderanordnung. Mit dieser Anordnung können Winkelstellungen exakt vorgegeben werden. Zudem sind diese Komponenten technisch ausgereift und für eine hohe Anzahl von Schaltspielen bestens geeignet.

Möglich ist eine Ausbildung, bei der eine Übersetzung eines Verstellweges zwischen Endstellungen des Linearstelltriebes für einen Schwenkwinkel der Förderröllchen um die Schwenkachse für etwa 180° ausgelegt ist. Damit wird eine unterschiedliche Auslegung von Schwenkwinkeln erreicht und können Ein- und Ausschleusvorgänge für das Transportgut in Abhängigkeit der Transportvorgaben und der Auslegung des gesamten Fördersystems optimiert werden.

Ist zwischen jeweils benachbarten Reihen der Förderröllchen über die Förderbreite ersteckend, jeweils zumindest eine angetriebene Förderrolle angeordnet, können weitere Varianten im Transferablauf erreicht werden.

Vorteilhaft ist es, wenn das Antriebs-Übertragungsmittelmittel eine Treibwelle umfasst, welche sich an einer Unterseite der Tragleiste zwischen den Stirnblechen des Traggestells erstreckt und an den Stirnblechen gelagert ist. Eine Drehachse der Treibwelle und die Schwenkachsen der Förderröllchen in der Reihe verlaufen in einer gemeinsamen Ebene. Dadurch wird eine einheitliche Bauform für die nur eine oder auch mehrere Reihen von Förderröllchen aufweisenden Fördermodule erreicht.

Es erweist sich auch als günstig, wenn die Treibwelle mit jeweils den Schwenkachsen der Röllchenträger zugeordnete, ringförmige Einschnürungen umfasst und die Förderröllchen jeweils als zwei Laufringe aufweisende Tandemröllchen mit zwischen den Laufringen ringförmig ausgebildeter Nut gebildet sind, wobei die Tandemröllchen mit der Treibwelle über jeweils an den Nuten und den Einschnürungen geführte endlose, schnurförmige Übertragungsmittel gekuppelt sind. Auf diese Weise wird eine exakte Zentrierung eines Übertragungsmittels für den Antrieb der Förderröllchen in Bezug auf die Schwenkachse erreicht. Auch kann es sich von Vorteil erweisen, wenn die Laufringe der Förderröllchen mit einer einen hohen Reibbeiwert aufweisenden Beschichtung, z. B. aus Polyurethan, versehen sind oder eine formschlüssige Struktur, z.B. eine geränderte Oberfläche aufweisen.

Gemäß einer Ausbildung der Erfindung ist es vorgesehen, dass das Fördermodul eine Übertriebsrolle und das Antriebs-Übertragungsmittel die Treibwelle umfasst, wobei die Übertriebsrolle in einem am Fördermodul angeordneten Kupplungsgehäuse drehbar gelagert und über einen umlaufenden Riemen mit der Treibwelle gekuppelt ist, und das Basismodul die Röllchen-Antriebsanordnung und eine Antriebsscheibe umfasst, wobei die Antriebsscheibe in einem am Basismodul angeordneten Kupplungsgehäuse drehbar gelagert ist, und dass die Übertriebsrolle über eine mechanische Kupplung lösbar mit einer Antriebsscheibe antriebsverbunden ist. Auf diese Weise wird eine rasche Trennung der Antriebsverbindung des Röllchenantriebes zwischen den Komponenten des Basismoduls und des Fördermoduls für Wartungs- und Instandhaltungszwecke erreicht.

Von Vorteil ist auch, wenn die Antriebsscheibe mit einem in axialer Richtung im Kupplungsgehäuse verstellbar gelagerten Kupplungsbolzen antriebsverbunden ist. Dabei können der Kupplungsbolzen und die Übertriebsrolle bevorzugt über eine stirnseitige Klauenverbindung gekuppelt werden. Der Kupplungsbolzen kann zudem über eine Federanordnung in Eingriffsstellung der Klauenverbindung vorgespannt werden. Dadurch ist eine hohe Sicherheit für eine störungsfreie Übertragung des Antriebsmomentes für den Förderröllchen-Antrieb gegeben.

Es erweist sich auch als günstig, wenn das Fördermodul eine Übertriebsrolle umfasst, wobei die Übertriebsrolle in einem am Fördermodul angeordneten Kupplungsgehäuse drehbar gelagert ist und über einen umlaufenden Riemen mit der Treibwelle gekuppelt ist, und das Basismodul einen Elektromotor umfasst, wobei die Übertriebsrolle über eine mechanische Kupplung lösbar mit dem Elektromotor antriebsverbunden ist. Auf diese Weise können unterschiedliche und an das jeweilige Fördersystem anpassbare Antriebslösungen in Kombination mit Rollenförderantriebe, Bandantriebe, Einzelantriebe konzipiert werden.

Vorteilhaft ist auch, wenn das Förderröllchen ein zwei Laufringe aufweisendes Tandemröllchen mit zwischen den Laufringen ringförmig ausgebildeter Nut ist und dass am Röllchenträger ein Abdeckelement angeordnet ist, das mit Durchbrüchen für einen Überstand eines Teilbereiches der Laufringe des Tandemröllchens versehen ist. Das Abdeckelement ist gemeinsam mit dem Röllchenträger schwenkbar. Dadurch wird in Kombination mit einer Deckplatte eine dichte Abdeckung der Transfer-Fördervorrichtung erreicht und Störungen durch Verschmutzung werden weitestgehend vermieden.

Die Transfer-Fördervorrichtung kann sehr einfach in ein Fördersystem für Transportgut als Baueinheit integriert werden. Es erweist sich auch von Vorteil, wenn eine Antriebsscheibe der Transfer-Fördervorrichtung über eine Riemenanordnung mit den vorgeordneten und nachgeordneten, angetriebenen Förderern, z.B. Bandförderer, Rollenförderer, antriebsverbunden ist.

Zum besseren Verständnis der Erfindung wird diese anhand der nachfolgenden Figuren näher erläutert.

Es zeigen jeweils in stark schematisch vereinfachter Darstellung:
- Fig. 1: ein Fördersystem mit einer erfindungsgemäßen Transfer-Fördervorrichtung in schematischer Ansicht;
- Fig. 2: die Transfer-Fördervorrichtung geschnitten gemäß den Linien II- II in Fig. 1; Transfer-Fördervorrichtung;
- Fig. 3: die Transfer-Fördervorrichtung nach Fig. 2 in getrenntem Zustand der Komponenten Fördermodul und Basismodul;
- Fig. 4: ein Detailausschnitt der Transfer-Fördervorrichtung geschnitten gemäß den Linien IV-IV in Fig. 2;
- Fig. 5: eine Detaildraufsicht auf die Schwenk-Antriebsanordnung der erfindungsgemäßen Transfer-Fördervorrichtung;
- Fig. 6: eine Kupplung der Röllchen-Antriebsanordnung der erfindungsgemäßen Transfer-Fördervorrichtung, geschnitten;
- Fig. 7: eine mögliche Röllchen-Antriebsanordnung in vereinfachter Darstellung;
- Fig. 8: eine weitere, mögliche Röllchen-Antriebsanordnung in vereinfachter Darstellung;
- Fig. 9: eine andere, mögliche Röllchen-Antriebsanordnung in vereinfachter Darstellung;
- Fig. 10 bis Fig. 17: zeigen beispielshaft Varianten von möglichen Transfer-Verfahren beim Betrieb von Fördersystemen mit der erfindungsgemäßen Transfer-Fördervorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

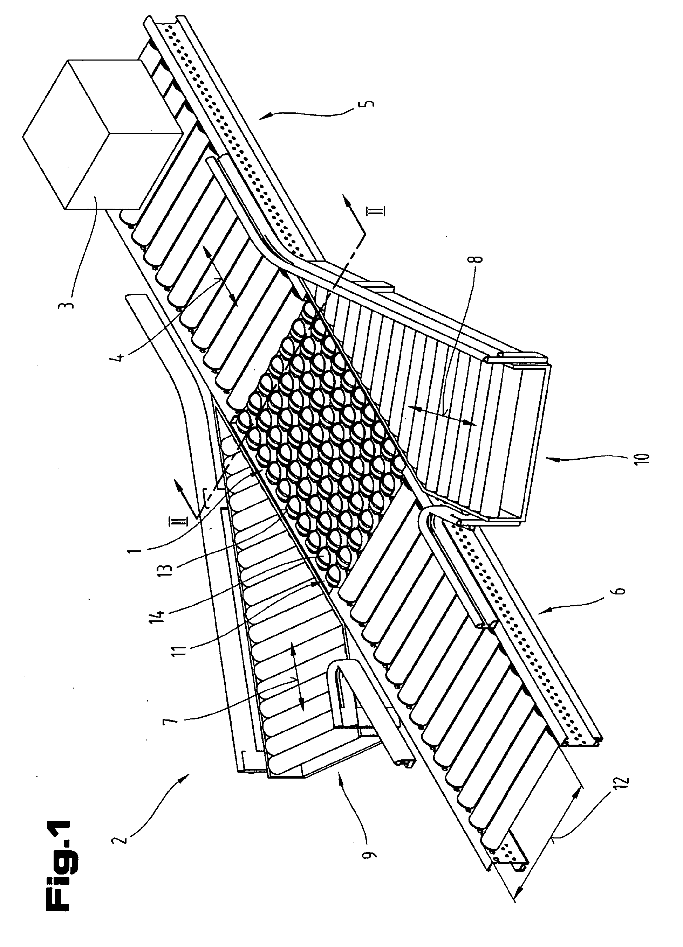

In der Fig. 1 ist eine Transfer-Fördervorrichtung 1 eines verzweigten Fördersystems 2 für Transportgüter 3 gezeigt. Das beispielhaft gezeigte Fördersystem 2 wird durch einen Hauptförderweg - gemäß Doppelpfeil 4 - ausbildende Rollenförderer 5, 6, mit der zwischen diesen angeordneten Transfer-Fördervorrichtung 1, und zwei in einem Winkel aus dem Bereich der Transfer-Fördervorrichtung 1 abzweigende und Nebenförderwege - gemäß Doppelpfeil 7, 8 - ausbildende Rollenbahnschleusen 9, 10 gebildet.

Selbstverständlich können anstelle der gezeigten Rollenförderer 5, 6 und/oder Rollenbahnschleusen 9, 10 auch andere Förderer, z.B. Röllchen-, Band-, Riemen- oder Kettenförderer etc. für die Haupt- und Nebenerderwege zum Einsatz gelangen.

Die Transfer-Fördervorrichtung 1 wird durch mehrere Reihen 11 über eine Förderbreite 12 verteilte, eine Förderebene 13 für das Transportgut 3 ausbildende Förderröllchen 14 gebildet. Die Förderröllchen sind je Reihe 11 gemeinsam angetrieben und um senkrecht zu der Förderebene 11 ausgerichtete Schwenkachsen schwenkbar und leiten je nach Schwenkstellung das Transportgut 3 längs des Hauptförderweges oder zwischen diesem und den Nebenförderwegen über das Fördersystem 2.

Je nach Auslegung der Förderrichtung des gezeigten Fördersystems 2 ist die Transferfördervorrichtung 1 für einen Ausschleusvorgang des Transportguts 3 aus dem Hauptförderweg - gemäß Doppelpfeil 4 - in die Nebenförderwege - gemäß Doppelpfeile 7, 8 oder bei umgekehrter Transportrichtung für einen Einschleusvorgang des Transportguts 3 aus den Nebenförderwege - gemäß Doppelpfeile 7, 8 in den Hauptförderweg - gemäß Doppelpfeil 4 - geeignet.

Auf weitere Detailausbildungen, wie sie für ein derartiges Fördersystem 2 bekannt sind, zum Beispiel Tragkonstruktionen, Antriebe, Leiteinrichtungen etc., braucht nicht weiters eingegangen zu werden, da sie in vielfachen, unterschiedlichen Ausbildungsformen aus dem Stand der Technik bekannt sind.

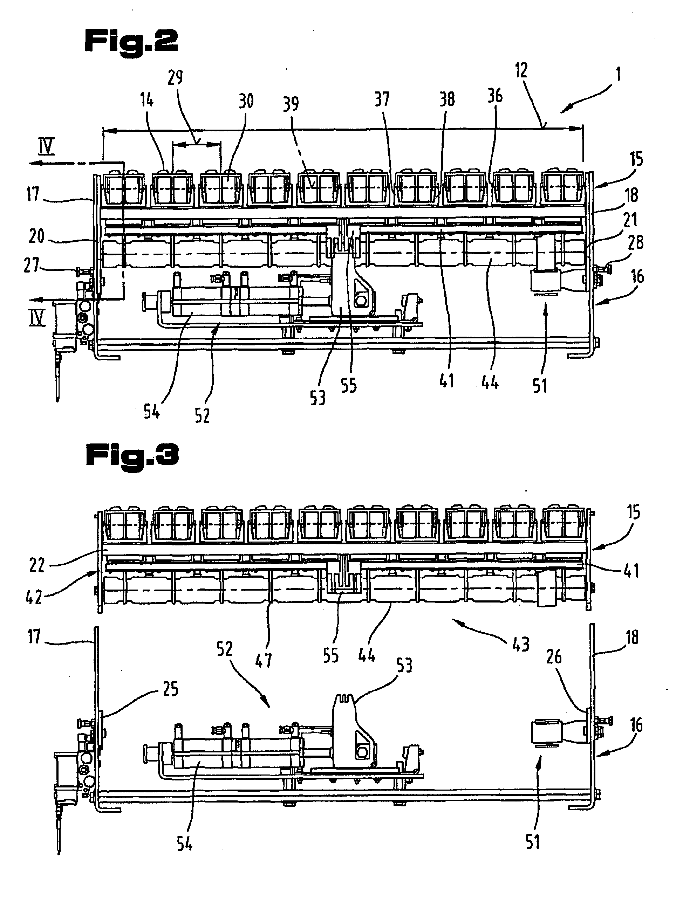

In den Fig. 2 bis 4 ist die erfindungsgemäße Transfer-Fördervorrichtung 1, bestehend aus einem Fördermodul 15 und einem Basismodul 16, welche getrennte, kuppelbare Baueinheiten bilden, gezeigt.

Das Basismodul 16 ist durch eine wannenförmige Blechkonstruktion gebildet und weist in der Förderbreite 12 distanzierte Seitenschenkel 17,18 auf, zwischen denen das Fördermodul 15 gehalten ist.

Im gezeigten Ausführungsbeispiel besteht das Fördermoduls 15 aus drei der Reihen 11 der Förderröllchen 14, die in einem Traggestell 19 als Reihengruppe zusammengefasst sind. Das Traggestell 19 umfasst zwei zwischen den Seitenschenkeln 17,18 positionierbare und mit diesen lösbar verbindbare Stirnbleche 20, 21 sowie eine zwischen diesen erstreckende und jeweils eine der Reihen 11 der Förderröllchen 14 aufnehmende Tragleiste 22.

Positioniert wird das Traggestell 19 zwischen den Seitenschenkeln 17, 18 über winkelig zueinander verlaufende Positionierflächen 23, 24 der Stirnbleche 20, 21 und durch an den Seitenschenkeln 17, 18 angeordnete Positionierkulissen 25, 26.

Eine lösbare Befestigung des Traggestells 19 an den Seitenschenkeln 17,18 erfolgt über Befestigungsmitteln 27,28, z.B. Schrauben, Bolzen, Riegel etc.

Nach einem Lösevorgang der Befestigungsmittel 27, 28 kann das, im gezeigten Ausführungsbeispiel drei Reihen 11 der Förderröllchen 14 aufweisende Fördermodul 15 aus dem Basismodul 16 in seiner Gesamtheit nach oben hin - wie in der Fig. 3 gezeigt, bei Bedarf, z.B. für eine Wartungs- oder Reparaturmaßnahme ohne weiteren Eingriff in das Fördersystem entnommen und wieder eingesetzt werden.

Die Gruppenbildung aus mehreren Reihen 11 zu dem Fördermodul 15 ist nur beispielshaft zu betrachten und kann das Fördermodul 15 durchaus auch nur eine Reihe 11 mit den Förderröllchen 14 oder auch eine Gruppe mit mehr als drei der Reihen 11 aufweisen.

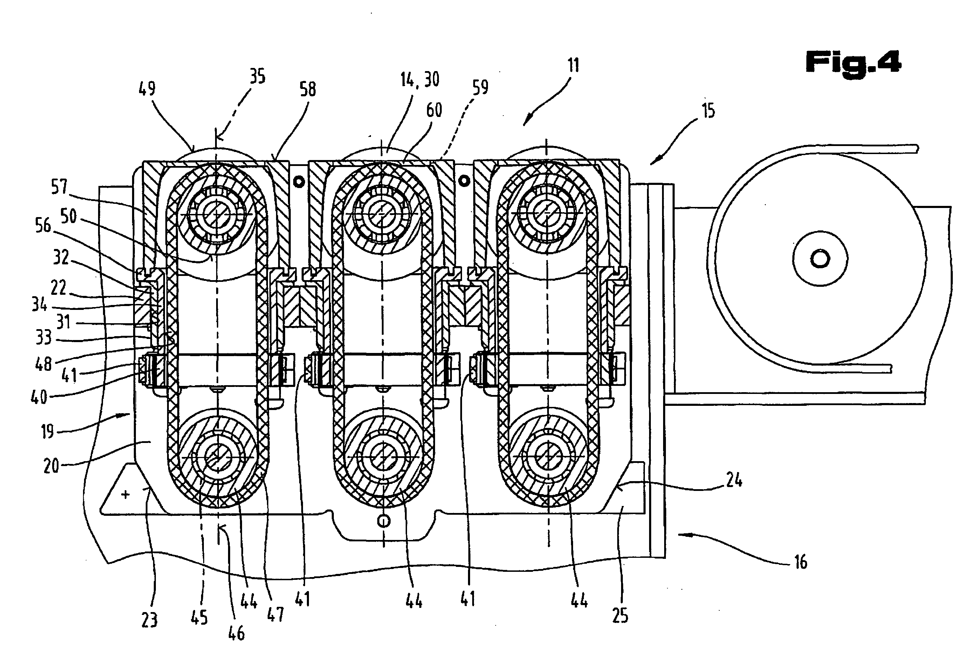

Betrachtet man nunmehr eine der Reihen 11 des Fördermoduls 15, gemäß den Fig. 3 und 4, besteht diese einerseits aus der zwischen Stirnblechen 20, 21 erstreckenden Tragleiste 22 und über die Förderbreite 12 in einem Mittelabstand 29 verteilt angeordneten Förderröllchen 14, die als Tandemröllchen 30 ausgebildet sind. Die Tragleiste 22 ist mit Bohrungen 31 versehen, in welchen Lagerbüchsen 32 als Gleitlager angeordnet sind, in denen über einen rohrförmigen Lagerfortsatz 33 Röllchenträger 34 um eine zur Förderebene 13 senkrecht verlaufende Schwenkachse 35 schwenkbar gelagert sind.

Die Tandemröllchen 30 sind über Lagerzapfen 36 zwischen Lagerschenkeln 37, 38 des Röllchenträgers 34 angeordnet und um eine zu der Schwenkachse 35 senkrecht ausgerichtete Drehachse 39 drehbar gelagert. Der Lagerfortsatz 33 durchragt die Lagerbüchse 32 und an dem ausragenden Endbereich des Lagerfortsatzes 33 ist ein Zahnring 40 befestigt.

Eine Antriebsverbindung sämtlicher Zahnringe 40 der Reihe 11 wird durch einen über die Zahnringe 40 geführten Zahnriemen 41 bewerkstelligt, und damit bei einer Verstellung des Zahnriemens 41 ein gemeinsamer Schwenkvorgang aller Röllchenträger 34 und damit ein Schwenk-Übertragungsmittel 42 erreicht, das längs einer Unterseite der Tragleiste 22 verläuft.

Weiters weist das Fördermodul 15 ein Antriebs-Übertragungsmittel 43 auf. Dieses wird durch eine unterhalb des Zahnriementriebes zwischen den Stirnblechen 20, 21 erstreckenden und in Lageranordnungen drehbar gelagerten Treibwelle 44 gebildet. Eine Drehachse 45 der Treibwelle 44 erstreckt sich in einer zwischen den Schwenkachsen 35 der Reihe 11 aufgespannten Ebene 46.

Die Treibwelle 44 weist im Bereich der Schwenkachsen 35 ringförmige Einschnürungen auf und erfolgt der Antrieb der Tandemröllchen 30 über endlose, schnurförmige Übertragungsmittel 47, die von der Treibwelle 44 durch eine Bohrung 48 des rohrförmigen Lagerfortsatzes 33 des Röllchenträgers 34 hindurchgeführt und über eine zwischen zwei Laufringen 49 des Tandem-Röllchens 30 ausgebildete, umlaufende ringförmige Nut 50 geführt sind.

Durch die Elastizität des Übertragungsmittels 47 ist ein Schwenken der Förderröllchen 14 um die Schwenkachsen 35 ausgehend von einer Mittellage auf nahezu +/- 90° möglich, wobei es zu einer Verschränkung der Förderstränge des Übertragungsmittels 47 kommt

Die im Fördermodul 15 angeordnete und gelagerte Treibwelle 44 mit den Übertragungsmitteln 47 bilden somit das Antriebs-Übertragungsmittel 43 des Fördermoduls 15.

Ein Antrieb der Treibwelle 44 erfolgt über eine Röllchen-Antriebsanordnung 51 des Basismoduls 16, wozu es, wie noch später im Detail beschrieben, mehrere Ausführungsvarianten gibt.

Ebenfalls ist im Basismodul 16 zumindest eine Schwenk-Antriebsanordnung 52 für eine lineare Verstellung eines mit dem Zahnriemen 41 des Fördermoduls 15 in Eingriff stehenden, kuppelbaren Mitnehmerelement 53 angeordnet, welches im gezeigten Ausführungsbeispiel durch einen mit einem Druckmedium beaufschlagbaren Linearstelltrieb 54 gebildet ist. Bevorzugt ist das Mitnehmerelement 53 in einen Riemenverbinder 55 einklinkbar und mit dem endlosen Zahnriemen 41 verbunden.

Über diesen Linearstelltrieb 54, der im Detail noch später beschrieben wird, und der kuppelbaren Antriebsverbindung mit dem Zahnriemen 41 erfolgt bei einer Verstellung des Mitnehmermittels 53 ein gemeinsames Schwenken sämtlicher Förderröllchen 14 von zumindest einer der Reihen 11.

Die bauliche Trennung zwischen dem Fördermodul 15 mit dem Schwenk-Übertragungsmittel 42, den Förderröllchen 14, der Treibwelle 44, dem Antriebs-Übertragungsmittel 43 und dem Basismodul 16 mit der Röllchen-Antriebsanordnung 51, Schwenk-Antriebsanordnung 52, dem Mitnehmermittel 53, ermöglicht ein Abnehmen des Fördermoduls 15 vom Basismodul 16 in seiner Gesamtheit, ohne Montageaufwand.

Damit wird eine vereinfachte Wartung oder im Bedarfsfall ein einfacher Tausch von Bauteilen erreicht, wobei die Antriebsverbindung für das Schwenken der Förderröllchen 14 und für den Antrieb der Treibwelle 44 ohne weitere Maßnahmen bzw. beim Einsetzen des Fördermoduls 15 in das Basismodul 16 selbsttätig erreicht wird.

Wie noch weiter der Fig. 4 zu entnehmen, ist nach einer möglichen Ausführungsform am Röllchenträger 34 ein Flansch 56 ausgebildet und mit diesem ein in Richtung der durch die Laufringe 49 der Tandemröllchen 30 gebildeten Förderebene hochgezogenes Abdeckelement 57 steckbar verbunden. Das Abdeckelement 57 weist außerdem an seiner Oberseite 58 einen kreisrunden Außenumfang auf.

An der Oberseite 58 sind entsprechend der Ausbildung des Tandemröllchens 30 zwei Durchbrüche 59 vorgesehen, in denen die Tandemröllchen 30 mit ihren Laufringen 49 die Oberseite 58 des Abdeckelements 57 überragen. Ein Überstand der Laufringe 49 gegenüber der Oberseite 58 beträgt in etwa 2 mm bis 12 mm, bevorzugt 5 mm. Dieses Abdeckelement 57 bewirkt mit einem die Durchbrüche 59 trennenden Mittelsteg 60 eine Überdeckung des Übertragungsmittels 47 und vermindert somit ein mögliches Verletzungsrisiko. Darüber hinaus wird mit den Abdeckelementen 57 in Verbindung mit einer nicht weiter dargestellten Deckplatte des nach dem gezeigten Ausftihrungsbeispiel aus drei der Reihen 11 bestehenden Fördermoduls 15 eine Überdeckung und damit eine Verhinderung des Ansammelns von Abriebrückständen, Staub, Schmutz, etc. in der Transfer-Fördervorrichtung 1 erreicht.

Eine weitere Möglichkeit der Befestigung des Abdeckelements-57 auf dem Röllchenträger 34 ist beispielsweise durch Aufstecken über federnde Klammem an den Lagerfortsätzen 33 des Röllchenträgers 34, in denen die Tandemröllchen 30 gelagert sind, möglich. Bevorzugt werden die Abdeckelemente 57 als Kunststoff-Spritzteile gefertigt.

Selbstverständlich ist damit gewährleistet, dass die den kreisrunden Außenumriss aufweisenden Abdeckelemente 57 die Schwenkbewegung der Röllchenträger 34 mitvollziehen und die bereits vorher erwähnte Abdeckplatte entsprechende Durchbrüche aufweist, wodurch ein relativ geringer Spalt zwischen den Abdeckelementen 57 und den entsprechenden Durchbrüchen der Abdeckplatte erreicht wird.

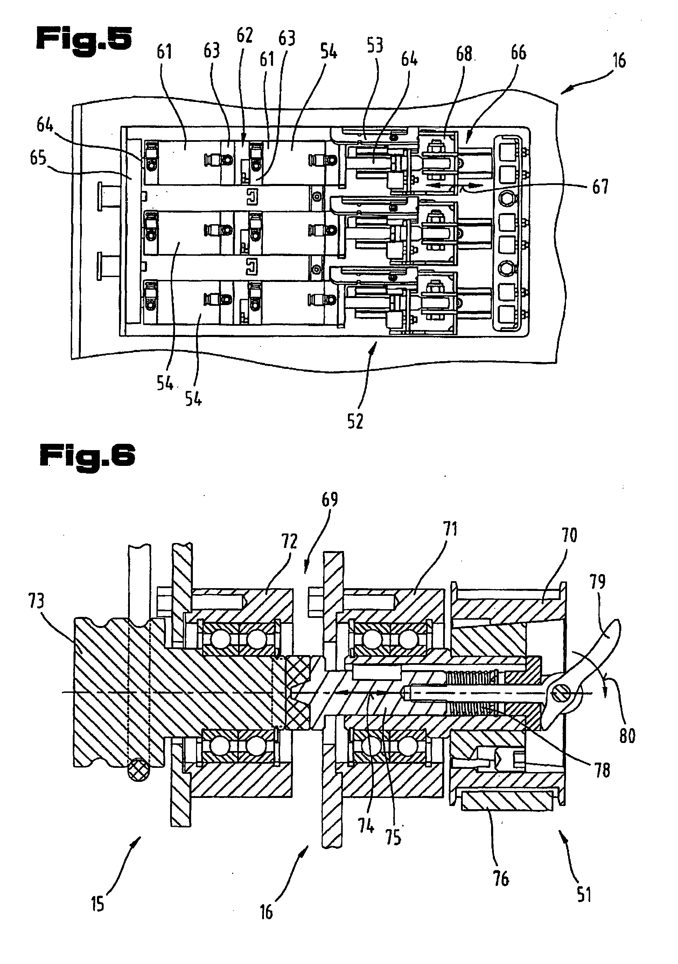

In der Fig. 5 ist ein Beispiel der im Basismodul 16 angeordneten Schwenk-Antriebsanordnung 52, bestehend aus drei Linearstelltrieben 54, zum Beispiel für drei der Reihen 11 der schwenkbaren Förderröllchen des Fördermoduls 15 - wie es in der Fig. 4 bereits beschrieben ist - gezeigt. Nach diesem Ausführungsbeispiel ist jeder Reihe 11 der Förderröllchen 14 ein Linearstelltrieb 54 bzw. Stellantrieb zugeordnet und sind somit diese Förderröllchen 14 je Reihe 11 unabhängig voneinander schwenkbar.

Die drei Stellantriebe sind von ihrem mechanischen Aufbau gleich konzipiert und besteht jeder der Stellantriebe aus zwei doppelt wirkenden, mit einem Druckmedium beaufschlagbaren, bauformgleichen Zylindern 61, die zu einem Aktuator 62 an gegenüberliegenden Stirnflächen von Zylinderböden 63 in achsfluchtender Ausrichtung von Kolbenstangen 64 aneinander befestigt sind.

Eine der Kolbenstangen 64 ist in einem im Basismodul 16 feststehend angeordneten Widerlager 65 befestigt. Die weitere Kolbenstange 64 des weiteren Zylinders 61 ist an einem, den Mitnehmer 53 für die Antriebsverbindung mit dem Zahnriemen 41 aufweisenden, in einer linearen Führungsanordnung 66 - gemäß Doppelpfeil 67 - verstellbaren Schlitten 68 befestigt.

Die Ausbildung des Linearstelltriebes 54 mit den beiden Zylindern 61 ermöglicht mit entsprechender Ansteuerung der Zylinder 61 drei Stellungen für das Mitnehmermittel 53 und zwar eine Mittelstellung, wie der Fig. 5 zu entnehmen, bei der die Kolbenstange 64 eines der Zylinder 61 ausgefahren ist, und ausgehend von dieser zwei entgegen gesetzte Endstellungen, bei der die Kolbenstangen 64 beider Zylinder 61 ausgefahren, oder beide Kolbenstangen 64 der Zylinder 61 eingefahren sind.

Der Aktuator 62 kann aber auch eine Servo-Linearachse bzw. ein elektrischer Spindeltrieb sein.

Der gewünschte Schwenkwinkel, um den die schwenkbaren Förderröllchen 14 insgesamt zwischen den entgegengesetzten Endstellungen verschwenkbar sein sollen, richtet sich nach der Auslegung des Hubes des Zylinders 61 sowie dem Übersetzungsverhältnis zwischen Zahnriemenhub und dem Zahn-Mittendurchmesser des am Röllchenträger 34 angeordneten Zahnringes 40.

Dem Schwenkwinkel sind durch die in den Endstellungen auftretenden Verschränkung der Antriebsstränge der Übertragungsmittel 47 für die Übertragung des Antriebsdrehmomentes auf das Förderröllchen 14 Grenzen gesetzt, jedoch ist es aufgrund der Elastizität des Übertragungsmittels 47 durchaus möglich, einen gesamten Schwenkwinkel zwischen den entgegengesetzten Endstellungen von nahezu 180° zu erreichen.

Es soll auch noch darauf hingewiesen werden, dass durchaus ein einziger Aktuator 62 auch für mehrere der Reihen 11 dann ausreichend ist, wenn die Förderröllchen 14 dieser Reihen 11 gemeinsam um einen jeweils gleichen Schwenkwinkel verstellbar sind. Bei einer derartigen Ausbildung werden mehrere, der mit den Mitnehmermittel 53 versehenen Schlitten 68 bewegungsverbunden und durch einen Aktuator 62 betätigt.

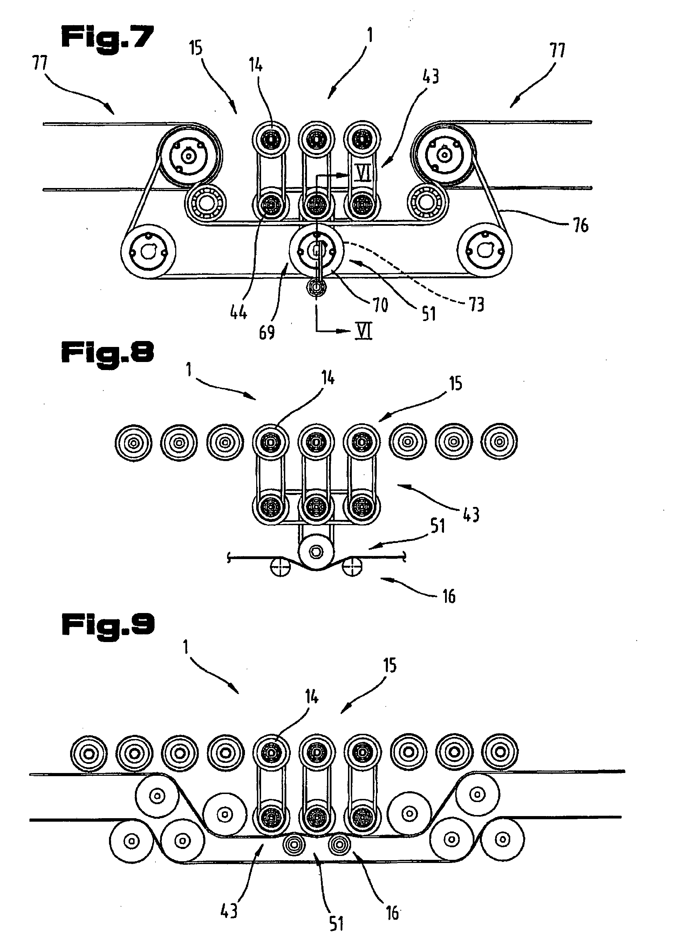

In den Fig. 6 und 7 ist eine Ausbildung für eine kuppelbare Antriebsverbindung zwischen der im Basismodul 16 vorgesehenen Röllchen-Antriebsanordnung 51 und dem im Fördermodul 15 angeordneten Antriebs-Übertragungsmitteln 43 mit einer manuell lösbaren, federbelasteten Kupplung 69 mit vorzugsweise Klaueneingriff für die Antriebsitbertragung.

Fig. 6 zeigt dabei die Kupplung 69 in Eingriffsstellung, die dann erreicht ist, wenn das Fördermodul 15 in seiner Position im Basismodul 16 fixiert ist und über die Kupplung 69 eine Antriebsverbindung zwischen einer Antriebsscheibe 70, welche in einem am Basismodul 16 angeordneten ersten Kupplungsgehäuse 71 drehbar gelagert ist, und einer Übertriebsrolle 73 der Antriebs-Übertragungsmittel 43, welche in einem am Fördermodul 15 befestigten weiteren Kupplungsgehäuse 72 drehbar gelagert ist, besteht.

Eine Kupplungsverbindung zwischen der Antriebsscheibe 70 und der Übertriebsrolle 73 erfolgt über einen stirnseitigen Klaueneingriff zwischen der Übertriebsrolle 73 und einem in Achsrichtung - gemäß Doppelpfeil 74 - verstellbaren Kupplungsbolzen 75, der mit der Antriebsscheibe 70 drehverbunden ist und in Eingriffstellung über eine Federvorspannung über einen stirnseitigen Klaueneingriff mit der drehbar im Kupplungsgehäuse 72 angeordneten Übertriebsrolle 73 zusammenwirkt.

Wie dem Ausführungsbeispiel zu entnehmen, erfolgt beispielsweise der Antrieb der Antriebsscheibe 70 durch eine Riemenanordnung 76 mit einem umlaufenden Riemen, ausgehend von beidseits der Transfer-Fördervorrichtung 1 angeordneten und angetriebenen Bandförderern 77 (Fig. 7).

Im eingekuppelten Zustand der Kupplung 69 erfolgt die weitere Antriebsverbindung über die Übertriebsrolle 73 mit den bereits in den vorhergehenden Figuren beschriebenen Antriebs-Übertragungsmitteln 43, welche je Reihe 11 der Förderröllchen 14 die Treibwelle 44 und die Antriebsverbindung der Treibwelle 44 mit den Förderröllchen 14 als Übertragungsmittel 47 aufweisen.

Ein Entkuppeln der Antriebsverbindung erfolgt beispielsweise durch Verstellung des Kupplungsbolzens 75 entgegen der Wirkung, beispielsweise einer Spiraldruckfeder 78 oder einem Tellerfederpaket durch Betätigung eines Nockenhebels 79 in Richtung eines Pfeiles 80, wodurch die stirnseitige Klauenverbindung zwischen dem Kupplungsbolzen 75 und der Übertriebsrolle 73 gelöst wird und damit das Fördermodul 15 vom Basismodul 16 entnommen werden kann.

An dieser Stelle sei weiters erwähnt, dass eine derartige Kupplungsanordnung auch zwischen einem nicht weiter gezeigten, am Basismodul 16 angeordneten Elektromotor und der am Fördermodul 15 angeordneten Übertriebsrolle 73 in dazu angepasster, konstruktiver Ausbildung der Kupplung für eine lösbare Antriebsverbindung zwischen dem Basismodul 16 und dem Fördermodul 15 selbstverständlich möglich ist.

Die Fig. 8 und 9 zeigen weitere mögliche Antriebsvarianten für eine lösbare Antriebsverbindung zwischen der im Basismodul 16 angeordneten Röllchen-Antriebsanordnung 51 und den im Fördermodul 15 angeordneten Antriebs-Übertragungsmitteln 43 der erfindungsgemäßen Transfer-Fördervorrichtung 1.

Nach diesen Lösungen werden vorhandene Antriebe im Fördersystem für den Röllchenantrieb der Transfer-Fördervorrichtung 1 sehr wirtschaftlich genutzt und wird auch die Trennung des Fördermoduls 15 vom Basismodul 16 in einfachster Weise erreicht.

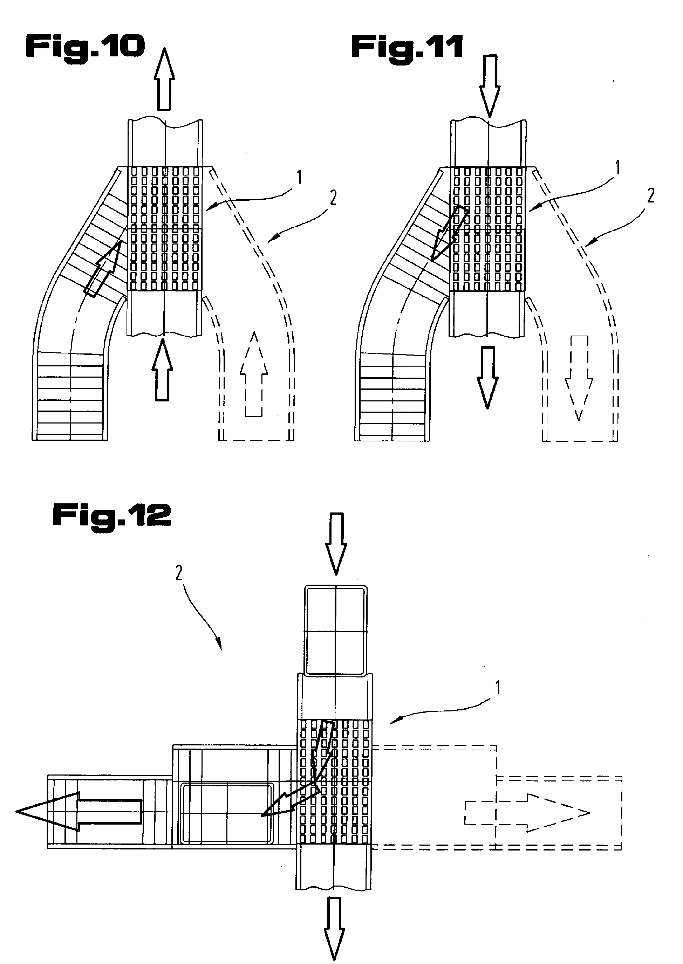

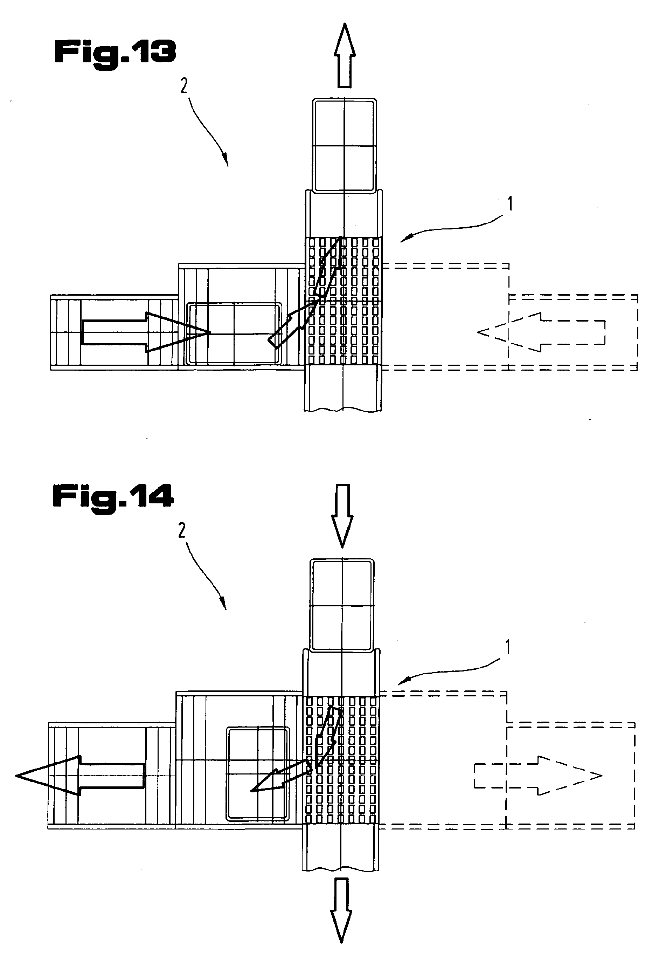

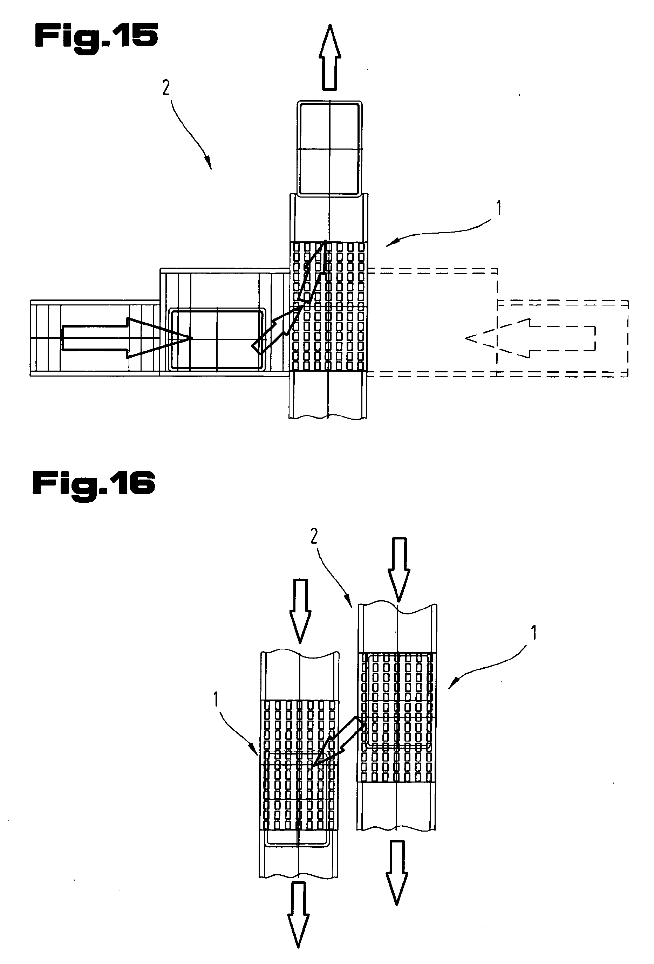

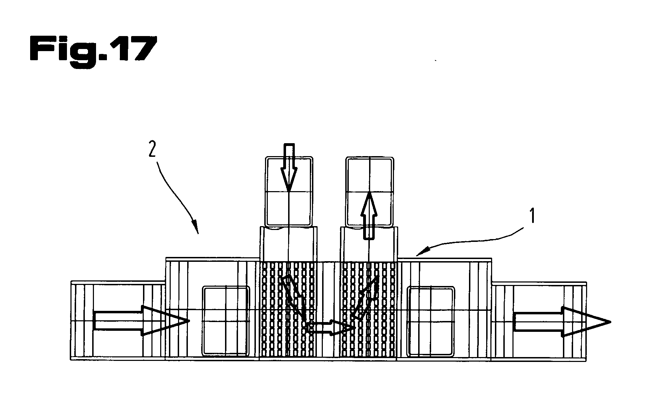

Durch den modulartigen Aufbau der Transfer-Fördervorrichtung 1, sind an die Transporterfordemisse sowie an das jeweils dazu konzipierte Fördersystem 2 anpassungsfähige Varianten möglich, wie beispielshaft in vereinfachter Darstellung in den Fig. 10 bis 17 gezeigt. Es sind Lösungen für Ein- und Ausschleusungen in den verschiedensten Winkelgraden beidseits bis nahezu 90° möglich.

Es können weiters Ein- und Ausschleusungen wie "längs/längs" sowie "längs/quer" ebenso realisiert werden wie auch eine "Parallelversetzung" des Transportgutes zwischen parallelen Förderwegen sowie auch "Parallelversetzung mit Umkehr der Förderrichtung" und "Durchfördern von einer Einschleuse- auf eine Ausschleusebahn".

Die Ausführungsbeispiele zeigen mögliche Ausführungsvarianten der Transfer-Fördervorrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausfuhrungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Transfer-Fördervorrichtung 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Transfer-Fördervorrichtung | 41 | Zahnriemen |
| 2 | Fördersystem | 42 | Schwenk-Übertragungsmittel |
| 3 | Transportgut | 43 | Antriebs-Übertragungsmittel |
| 4 | Doppelpfeil | 44 | Treibwelle |
| 5 | Rollenförderer | 45 | Drehachse |
| | | | |
| 6 | Rollenförderer | 46 | Ebene |
| 7 | Doppelpfeil | 47 | Übertragungsmittel |
| 8 | Doppelpfeil | 48 | Bohrung |
| 9 | Rollenbahnschleuse | 49 | Laufring |
| 10 | Rollenbahnschleuse | 50 | Nut |
| | | | |
| 11 | Reihe | 51 | Röllchen-Antriebsanordnung |
| 12 | Förderbreite | 52 | Schwenk-Antriebsanordnung |
| 13 | Förderebene | 53 | Mitnehmermittel |
| 14 | Förderröllchen | 54 | Linearstelltrieb |
| 15 | Fördermodul | 55 | Riemenverbinder |
| | | | |
| 16 | Basismodul | 56 | Flansch |
| 17 | Seitenschenkel | 57 | Abdeckelement |
| 18 | Seitenschenkel | 58 | Oberseite |
| 19 | Traggestell | 59 | Durchbruch |
| 20 | Stirnblech | 60 | Mittelsteg |
| | | | |
| 21 | Stirnblech | 61 | Zylinder |
| 22 | Tragleiste | 62 | Aktuator |
| 23 | Positionierfläche | 63 | Zylinderboden |
| 24 | Positionierfläche | 64 | Kolbenstange |
| 25 | Positionierkulisse | 65 | Widerlager |
| | | | |
| 26 | Positionierkulisse | 66 | Führungsanordnung |
| 27 | Befestigungsmittel | 67 | Doppelpfeil |
| 28 | Befestigungsmittel | 68 | Schlitten |
| 29 | Mittelabstand | 69 | Kupplung |
| 30 | Tandemröllchen | 70 | Antriebsscheibe |
| | | | |
| 31 | Bohrung | 71 | Kupplungsgehäuse |
| 32 | Lagerbüchse | 72 | Kupplungsgehäuse |
| 33 | Lagerfortsatz | 73 | Übertriebsrolle |
| 34 | Röllchenträger | 74 | Doppelpfeil |
| 35 | Schwenkachse | 75 | Kupplungsbolzen |
| | | | |
| 36 | Lagerzapfen | 76 | Riemenanordnung |
| 37 | Lagerschenkel | 77 | Bandförderer |
| 38 | Lagerschenkel | 78 | Spiraldruckfeder |
| 39 | Drehachse | 79 | Nockenhebel |
| 40 | Zahnring | 80 | Pfeil |

## Patentansprüche

1. Transfer-Fördervorrichtung (1) mit einem Fördermodul (15), einem Basismodul (16), eine Förderebene (13) ausbildenden Förderröllchen (14) für den Transport eines Transportgutes (3) in eine Hauptförderrichtung oder eine Nebenförderrichtung, einer Schwenk-Antriebsanordnung (52) und einem Schwenk-Übertragungsmittel (42) zum Schwenken der Förderröllchen (14) um zur Förderebene (13) senkrecht verlaufenden Schwenkachsen (35) und einer Röllchen-Antriebsanordnung (51) und einem Antriebs-Übertragungsmittel (43) zum Antrieb der Förderröllchen (14), wobei jedes Förderröllchen (14) über einen Lagerzapfen (36) zwischen Lagerschenkel (37) eines um die Schwenkachse (35) schwenkbaren Röllchenträgers (34) gelagert und um eine zur Schwenkachse (35) senkrecht ausgerichtete Drehachse (39) drehbar ist und wobei das Fördermodul (15) mit dem Basismodul (16) trennbar verbunden ist, welches Basismodul (16) die Schwenk-Antriebsanordnung (52) und die Röllchen-Antriebsanordnung (51) umfasst, wobei ein Traggestell (19), zumindest eine quer zur Hauptförderrichtung angeordnete Reihe (11) von Förderröllchen (14), das Schwenk-Übertragungsmittel (42) zum Schwenken der Förderröllchen (14) in dieser Reihe (11) und das Antriebs-Übertragungsmittel (43) zum Antrieb der Förderröllchen (14) in dieser Reihe (11) das Fördermodul (15) ausbildet, und wobei das Traggestell (19) zwischen Seitenschenkel (17,18) des Basismoduls (16) positionierte und mit diesen lösbar verbundene Stirnbleche (20, 21) sowie eine zwischen diesen erstreckende Tragleiste (22) umfasst, **dadurch gekennzeichnet, dass** die Tragleiste (22) mit Bohrungen (31) und in diesen angeordneten Lagerbüchsen (32) jeweils zur schwenkbaren Lagerung eines Röllchenträgers (34) mit einem rohrförmigen Lagerfortsatz (33) versehen ist, wobei der Lagerfortsatz (33) jedes Röllchenträgers (34) aus der Lagerbüchse (32) an einer Unterseite der Tragleiste (22) herausragt und an seinem herausragenden Endbereich mit einem Zahnring (40) antriebsverbunden ist, und dass die Zahnringe (40) in dieser Reihe (11) über einen gemeinsame, mit den Zahnringen (40) in Eingriff stehenden Zahnriemen (41) antriebsverbunden sind, und dass der Zahnriemen (41) über einen Riemenverbinder mit einem die Schwenk-Antriebsanordnung (52) aufweisenden Mitnehmermittel (53) gekuppelt ist.

2. Transfer-Fördervorrichtung (1) nach Anspruch 1, **dadurch gekennzeichnet, dass** das Fördermodul (15) mehrere parallele und zueinander gering beabstandete, über eine Förderbreite (12) erstreckende Reihen (11) von Förderröllchen (14) aufweist.

3. Transfer-Fördervorrichtung (1) nach Anspruch 2, **dadurch gekennzeichnet, dass** den Reihen (11) eine gemeinsame, mit den Antriebs-Übertragungsmitteln (43) kuppelbare Rällchen-Antriebsanordnung (51) im Basismodul (16) zugeordnet ist.

4. Transfer-Fördervorrichtung (1) nach Anspruch 2, **dadurch gekennzeichnet, dass** den Reihen (11) eine gemeinsame, mit den Schwenk-Übertragungsmitteln (42) kuppelbare Schwenk-Antriebsanordnung (52) im Basismodul (16) zugeordnet ist.

5. Transfer-Fördervorrichtung (1) nach Anspruch 1, **dadurch gekennzeichnet, dass** die Schwenk-Antriebsanordnung (52) durch einen Linearstelltrieb (54) gebildet ist.

6. Transfer-Fördervorrichtung (1) nach Anspruch 5, **dadurch gekennzeichnet, dass** eine Übersetzung eines Verstellweges zwischen Endstellungen des Linearstelltriebes (54) für einen Schwenkwinkel der Förderröllchen (14) um die Schwenkachse (35) für etwa 180° ausgelegt ist.

7. Transfer-Fördervorrichtung (1) nach Anspruch 1, **dadurch gekennzeichnet, dass** zwischen jeweils benachbarten Reihen (11) der Förderröllchen (14) über die Förderbreite (12) ersteckend, jeweils zumindest eine angetriebene Förderrolle angeordnet ist.

8. Transfer-Fördervorrichtung (1) nach Anspruch 1, **dadurch gekennzeichnet, dass** das Antriebs-Übertragungsmittelmittel (43) eine Treibwelle (44) umfasst, welche sich an einer Unterseite der Tragleiste (22) zwischen den Stirnblechen (20,21) des Traggestells (19) erstreckt und an den Stirnblechen (20, 21) gelagert ist.

9. Transfer-Fördervorrichtung (1) nach Anspruch 8, **dadurch gekennzeichnet, dass** die Treibwelle (44) mit jeweils den Schwenkachsen (35) der Röllchenträger (34) zugeordnete, ringförmige Einschnürungen umfasst und die Förderröllchen (14) jeweils als zwei Laufringe (49) aufweisende Tandemröllchen (30) mit zwischen den Laufringen (49) ringförmig ausgebildeter Nut (50) gebildet sind, wobei die Tandemröllchen (30) mit der Treibwelle (44) über jeweils an den Nuten (50) und den Einschnürungen geführte endlose, schnurförmige Übertragungsmittel (47) gekuppelt sind.

10. Transfer-Fördervorrichtung (1) nach Anspruch 8, **dadurch gekennzeichnet, dass** das Fördermodul (15) eine Übertriebsrolle (73) umfasst, wobei die Übertriebsrolle (73) in einem am Fördermodul (15) angeordneten Kupplungsgehäuse (72) drehbar gelagert und über einen umlaufenden Riemen mit der Treibwelle (44) gekuppelt ist, und das Basismodul (16) eine Antriebsscheibe (70) umfasst, wobei die Antriebsscheibe (70) in einem am Basismodul (16) angeordneten Kupplungsgehäuse (71) drehbar gelagert ist, und dass die Übertriebsrolle (73) über eine mechanische Kupplung (69) lösbar mit einer Antriebsscheibe (70) antriebsverbunden ist.

11. Transfer-Fördervorrichtung (1) nach Anspruch 10, **dadurch gekennzeichnet, dass** die Antriebsscheibe (70) mit einem in axialer Richtung im Kupplungsgehäuse (71) verstellbar gelagerten Kupplungsbolzen (75) antriebsverbunden ist.

12. Transfer-Fördervorrichtung (1) nach Anspruch 11, **dadurch gekennzeichnet, dass** der Kupplungsbolzen (75) und die Übertriebsrolle (73) bevorzugt über eine stirnseitige Klauenverbindung kuppelbar sind.

13. Transfer-Fördervorrichtung (1) nach Anspruch 12, **dadurch gekennzeichnet, dass** der Kupplungsbolzen (75) über eine Federanordnung in Eingriffsstellung der Klauenverbindung vorgespannt ist.

14. Transfer-Fördervorrichtung (1) nach Anspruch 8, **dadurch gekennzeichnet, dass** das Fördermodul (15) eine Übertriebsrolle (73) umfasst, wobei die Übertriebsrolle (73) in einem am Fördermodul (15) angeordneten Kupplungsgehäuse (72) drehbar gelagert ist und über einen umlaufenden Riemen mit der Treibwelle (44) gekuppelt ist, und das Basismodul (16) einen Elektromotor umfasst, wobei die Übertriebsrolle (73) über eine mechanische Kupplung (69) lösbar mit dem Elektromotor antriebsverbunden ist,

15. Transfer-Fördervorrichtung (1) nach Anspruch 1, **dadurch gekennzeichnet, dass** das Förderröllchen (14) ein zwei Laufringe (49) aufweisendes Tandemröllchen (30) mit zwischen den Laufringen (49) ringförmig ausgebildeter Nut (50) für ein schnurförmiges Übertragungsmittel (47) ist und dass am Röllchenträger (34) ein Abdeckelement (57) angeordnet ist, das mit Durchbrüchen (59) für einen Überstand eines Teilbereiches der Laufringe (49) des Tandemröllchens (30) versehen ist.

16. Fördersystem für den Transport von Transportgütern (3) mit einer Transfer-Fördervorrichtung (1), einem dieser vorgeordneten, angetriebenen Förderer (77) und einem dieser nachgeordneten, angetriebenen Förderer (77), **dadurch gekennzeichnet, dass** die Transfer-Fördervorrichtung (1) nach Anspruch 10 ausgebildet ist, wobei die Antriebsscheibe (70) über eine Riemenanordnung (76) mit den vorgeordneten und nachgeordneten, angetriebenen Förderern (77), z.B. Bandförderer, Rollenförderer, antriebsverbunden ist.

## Claims

1. Transfer conveying apparatus (1) having a conveying module (15), a base module (16), small conveying rollers (14) which form a conveying plane (13) for transporting an item of transported goods (3) in a main conveying direction or an auxiliary conveying direction, a pivoting drive arrangement (52) and a pivoting transfer means (42) for pivoting the small conveying rollers (14) about pivot axes (35) which extend perpendicularly with respect to the conveying plane (13) and with a small-roller drive arrangement (51) and a drive transfer means (43) for driving the small conveying rollers (14), with each small conveying roller (14) being mounted between bearing leg (37) of a carrier for small rollers (34) that can be pivoted about the pivot axis (35) via a bearing pin (36) and being able to be rotated around a rotary axis (39) that is aligned perpendicularly with respect to the pivot axis (35) and with the conveying module (15) being detachably connected to the base module (16), which base module (16) comprises the pivoting drive arrangement (52) and the small-roller drive arrangement (51), and a load-bearing frame (19), at least one row (11) of small conveying rollers (14) extending transversely with respect to the main conveying direction, the pivoting transfer means (42) for pivoting the small conveying rollers (14) in this row (11), and the drive transfer means (43) for driving the small conveying rollers (14) in this row (11), form the conveying module (15), with the load-bearing frame (19) comprising front plates (20, 21) which are positioned between lateral legs (17, 18) of the base module (16) and detachably connected to the latter as well as a support bar (22) extending between the front plates (20, 21), **characterized in that** the support bar (22) is provided with bores (31) and therein arranged bearing bushings (32) each for pivotably accommodating a carrier for small rollers (34) with a tube-shaped bearing extension (33), with the bearing extension (33) of each of the carriers for small rollers (34) protruding from the bearing bushing (32) at the lower side of the support bar (22), and in its protruding end region being drive-connected with a toothed ring (40), and that the toothed rings (40) in this row (11) are drive-connected via a common toothed belt (41) engaging in the toothed rings (40), and that the toothed belt (41) is coupled to a drive member (53) having the pivoting drive arrangement (52) by means of a belt connector.

2. Transfer conveying apparatus (1) according to claim 1, **characterized in that** the conveying module (15) has a number of rows (11) of small conveying rollers (14), which rows (11) are parallel, arranged at low distances to each other and extend across a conveying width (12).

3. Transfer conveying apparatus (1) according to claim 2, **characterized in that** the rows (11) are assigned to a common small-roller drive arrangement (51) that may be coupled to the drive transfer means (43) in the base module (16).

4. Transfer conveying apparatus (1) according to claim 2, **characterized in that** the rows (11) are assigned to a common pivoting drive arrangement (52) that may be coupled to the pivoting transfer means (42) in the base module (16).

5. Transfer conveying apparatus (1) according to claim 1, **characterized in that** the pivoting drive arrangement (52) is formed by a linear adjustment drive (54).

6. Transfer conveying apparatus (1) according to claim 5, **characterized in that** a transmission of an adjustment way between end positions of the linear adjustment drive (54) is designed for a pivot angle of the small conveying rollers (14) about the pivot axis of approximately 180°.

7. Transfer conveying apparatus (1) according to claim 1, **characterized in that** at least one respective driven conveying roller is arranged between respectively adjacent rows (11) of small conveying rollers (14) extending across a conveying width (12).

8. Transfer conveying apparatus (1) according to claim 1, **characterized in that** the drive transfer means (43) comprises a drive shaft (44) which extends along a lower side of the support bar (22) between the front plates (20, 21) of the load-bearing frame (19) and is mounted to the front plates (20, 21).

9. Transfer conveying apparatus (1) according to claim 8, **characterized in that** the drive shaft (44) comprises annular constrictions which are assigned to the respective pivot axes (35) of the carrier for small rollers (34), and the small conveying rollers (14) are designed to be small tandem rollers (30) having two raceways (49) each, and have an annularly designed groove (50) between the raceways (49), with the small tandem rollers (30) being coupled to the drive shaft (44) by means of endless string-like transmission means (47) each running in the grooves (50) and the constrictions.

10. Transfer conveying apparatus (1) according to claim 8, **characterized by** that the conveying module (15) comprises a transmission roller (73), with the transmission roller (73) being mounted in a rotatable way in a coupling housing (72) arranged at the conveying module (15) and coupled to the drive shaft (44) by means of a circulating belt, and the base module (16) comprises a disc drive (70), with the disc drive (70) being mounted in a rotatable way in a coupling housing (71) arranged at the base module (16), and that the transmission roller (73) is detachably drive-connected to a disc drive (70) via a mechanical coupling (69).

11. Transfer conveying apparatus (1) according to claim 10, **characterized in that** the disc drive (70) is drive-connected to a coupling pin (75) being mounted in the coupling housing (71) so as to be adjustable in axial direction.

12. Transfer conveying apparatus (1) according to claim 11, **characterized in that** the coupling pin (75) and the transmission roller (73) can preferably be coupled via a claw coupling on the end wall side.

13. Transfer conveying apparatus (1) according to claim 12, **characterized in that** the coupling pin (75) is pre-stressed by means of a spring arrangement in engaged position of the claw coupling.

14. Transfer conveying apparatus (1) according to claim 8, **characterized in that** the conveying module (15) comprises a transmission roller (73), with the transmission roller (73) being mounted as to be rotatable in a coupling housing (72) arranged at a conveying module (15) and coupled to the drive shaft (44) by means of a circulating belt, and the base module (16) comprises an electric motor, with the transmission roller (73) being detachably drive-connected to the electric motor by means of a mechanical coupling.

15. Transfer conveying apparatus (1) according to claim 1, **characterized in that** the small conveying roller (14) is designed to be a small tandem roller (30) having an annularly designed groove between the raceways (49) for a string-shaped transmission means (47), and that a covering element (57) is arranged at the carrier for small rollers (34), which covering element (57) is provided with apertures (59) for a protrusion of a portion of the raceways (49) of the small tandem rollers (30).

16. Conveying system for transporting items of transported goods (3) with a transfer conveying apparatus (1), a driven conveyor (77) being arranged upstream of the latter and a driven belt conveyor (77) being arranged downstream of the latter, **characterized in that** the transfer conveying apparatus (1) is embodied according to claim 10, with the disc drive (70) being drive-connected to driven conveyors (77), e.g. belt conveyors, roller conveyors, arranged upstream and downstream by means of a belt arrangement (76).

## Revendications

1. Convoyeur de transfert (1) comportant un module de transport (15), un module de base (16), des rouleaux de transport (14) formant un plan de transport (13) pour le transport d'un produit (3) dans une direction de transport principale ou une direction de transport secondaire, un dispositif d'entraînement pivotant (52) et un moyen de transmission pivotant (42) permettant de faire pivoter les rouleaux de transport (14) autour des axes de pivotement (35) perpendiculaires au plan de transport (13), et un dispositif d'entraînement des rouleaux (51) et un moyen de transmission d'entraînement (43) permettant d'actionner les rouleaux de transport (14), chaque rouleau de transport (14) étant monté par l'intermédiaire d'un tourillon (36) entre des branches d'appui (37) d'un porte-rouleaux (34) apte à pivoter autour de l'axe de pivotement (35) et étant apte à tourner autour d'un axe de rotation (39) orienté perpendiculairement à l'axe de pivotement (35), et le module de transport (15) étant relié de manière amovible au module de base (16), lequel module de base (16) comporte le dispositif d'entraînement pivotant (52) et le dispositif d'entraînement des rouleaux (51), un bâti (19) comportant au moins une rangée (11) de rouleaux de transport (14), disposée transversalement à la direction de transport principale, le moyen de transmission pivotant (42) pour faire pivoter les rouleaux de transport (14) dans cette rangée (11) et le moyen de transmission d'entraînement (43) pour actionner les rouleaux de transport (14) dans cette rangée (11) formant le module de transport (15), et le bâti (19) étant positionné entre les branches latérales (17, 18) du module de base (16) et comportant des plaques frontales (20, 21) reliées de manière amovible à celles-ci, ainsi qu'une latte de support (22) s'étendant entre celles-ci, **caractérisé en ce que** la latte de support (22) est munie de perçages (31) et de coussinets (32) logés dans ceux-ci, destinés chacun à assurer le montage pivotant d'un porte-rouleaux (34) avec un prolongement d'appui (33) tubulaire, ledit prolongement d'appui (33) de chaque porte-rouleaux (34) s'avançant hors du coussinet (32) sur une face inférieure de la latte de support (22) et étant relié en entraînement à une bague dentée (40) dans sa zone d'extrémité saillante, et **en ce que** les bagues dentées (40) sont reliées en entraînement dans cette rangée (11) conjointement par l'intermédiaire d'une courroie dentée (41) engrenant avec les bagues dentées (40), et **en ce que** la courroie dentée (41) est couplée, par l'intermédiaire d'une attache de courroies, à un entraîneur (53) comportant le dispositif d'entraînement pivotant (52).

2. Convoyeur de transfert (1) selon la revendication 1, **caractérisé en ce que** le module de transport (15) comporte plusieurs rangées (11) de rouleaux de transport (14), parallèles entre elles, situées à faible distance les unes des autres et s'étendant sur une largeur de transport (12).

3. Convoyeur de transfert (1) selon la revendication 2, **caractérisé en ce que** les rangées (11) sont associées dans le module de base (16) à un dispositif d'entraînement des rouleaux (51) commun, pouvant être couplé aux moyens de transmission d'entraînement (43).

4. Convoyeur de transfert (1) selon la revendication 2, **caractérisé en ce que** les rangées (11) sont associées dans le module de base (16) à un dispositif d'entraînement pivotant (52) commun, pouvant être couplé aux moyens de transmission pivotants (42).

5. Convoyeur de transfert (1) selon la revendication 1, **caractérisé en ce que** le dispositif d'entraînement pivotant (52) est formé par un mécanisme de réglage linéaire (54).

6. Convoyeur de transfert (1) selon la revendication 5, **caractérisé en ce qu'**un rapport de transmission d'un trajet de réglage entre les positions finales du mécanisme de réglage linéaire (54) est dimensionné pour un angle de pivotement des rouleaux de transport (14) autour de l'axe de pivotement (35) pour environ 180°.

7. Convoyeur de transfert (1) selon la revendication 1, **caractérisé en ce qu'**entre respectivement deux rangées (11) adjacentes de rouleaux de transport (14) est disposé, sur toute la largeur de transport (12), respectivement au moins un rouleau de transport actionné.

8. Convoyeur de transfert (1) selon la revendication 1, **caractérisé en ce que** le moyen de transmission d'entraînement (43) comporte un arbre moteur (44), qui s'étend sur une face inférieure de la latte de support (22) entre les plaques frontales (20, 21) du bâti (19) et est monté sur les plaques frontales (20, 21).

9. Convoyeur de transfert (1) selon la revendication 8, **caractérisé en ce que** l'arbre moteur (44) comporte des gorges annulaires, associées à chacun des axes de pivotement (35) des porte-rouleaux (34), et les rouleaux de transport (14) sont formés respectivement sous forme de rouleaux tandems (30) comportant deux bagues de roulement (49) et munis d'une rainure (50) annulaire entre les bagues de roulement (49), lesdits rouleaux tandems (30) étant couplés chacun à l'arbre moteur (44) par des moyens de transmission (47) en forme de cordon continu guidé sur les rainures (50) et les gorges.

10. Convoyeur de transfert (1) selon la revendication 8, **caractérisé en ce que** le module de transport (15) comporte un rouleau de suractionnement (73), ledit rouleau de suractionnement (73) étant monté rotatif dans un carter de couplage (72) disposé sur le module de transport (15) et étant couplé à l'arbre moteur (44) par l'intermédiaire d'un courroie continue, et le module de base (16) comportant une poulie de commande (70), ladite poulie de commande (70) étant montée rotative dans un carter de couplage (71) disposé sur le module de base (16), et **en ce que** le rouleau de suractionnement (73) est relié en entraînement de manière amovible à une poulie de commande (70) par l'intermédiaire d'un couplage (69) mécanique.

11. Convoyeur de transfert (1) selon la revendication 10, **caractérisé en ce que** la poulie de commande (70) est reliée en entraînement à un axe de couplage (75) réglable dans le sens axial dans le carter de couplage (71).

12. Convoyeur de transfert (1) selon la revendication 11, **caractérisé en ce que** l'axe de couplage (75) et le rouleau de suractionnement (73) peuvent être couplés de préférence par l'intermédiaire d'un assemblage à griffes frontal.

13. Convoyeur de transfert (1) selon la revendication 12, **caractérisé en ce que** l'axe de couplage (75) est précontraint, par l'intermédiaire d'un système à ressort, dans la position d'engagement de l'assemblage à griffes.

14. Convoyeur de transfert (1) selon la revendication 8, **caractérisé en ce que** le module de transport (15) comporte un rouleau de suractionnement (73), ledit rouleau de suractionnement (73) étant monté rotatif dans un carter de couplage (72) disposé sur le module de transport (15) et étant couplé à l'arbre moteur (44) par l'intermédiaire d'un courroie continue, et le module de base (16) comportant un moteur électrique, ledit rouleau de suractionnement (73) étant relié en entraînement de manière amovible au moteur électrique par l'intermédiaire d'un couplage (69) mécanique.

15. Convoyeur de transfert (1) selon la revendication 1, **caractérisé en ce que** le rouleau de transport (14) est un rouleau tandem (30) comportant deux bagues de roulement (49) et muni d'une rainure (50) annulaire, réalisée entre les bagues de roulement (49) pour un moyen de transmission (47) en forme de cordon, et **en ce que** sur le porte-rouleaux (34) est disposé un élément de recouvrement (57) qui est muni de percées (59) pour un déport d'une zone partielle des bagues de roulement (49) du rouleau tandem (30).

16. Système de convoyage pour transporter des produits (3), comportant un convoyeur de transfert (1), un convoyeur (77) entraîné, monté en amont de celui-ci, et un convoyeur (77) entraîné, monté en aval de celui-ci, **caractérisé en ce que** le convoyeur de transfert (1) est réalisé selon la revendication 10, la poulie de commande (70) étant reliée en entraînement, par l'intermédiaire d'un ensemble à courroie (76), aux convoyeurs (77) entraînés, montés en amont et en aval, tels que des convoyeurs à bande, des convoyeurs à rouleaux.
